# EUROPÄISCHE PATENTSCHRIFT

(11) **EP 2 962 766 B1**
(45) Veröffentlichungstag und Bekanntmachung des Hinweises auf die Patenterteilung: **23.11.2016**
(21) Anmeldenummer: 14002233.6
(22) Anmeldetag: 30.06.2014
(51) Int. Cl.: B05B 12/00, B05B 12/12, B05B 12/08

(54) **System und Verfahren zur Ermittlung von komponentenbezogenen Verzugszeiten für die roboterbasierte Spritzapplikation von viskosen Fluiden**
System and method for determining component-related delay times for the robotic spray application of viscous fluids
Système et procédé de détermination de temps morts relatifs aux composants pour l'application par pulvérisation robotisée de fluides visqueux

(43) Veröffentlichungstag der Anmeldung: 06.01.2016
(73) Patentinhaber: ABB Schweiz AG, 5400 Baden (CH)
(72) Erfinder: Hofschulte, Jens, 61381 Friedrichsdorf (DE); Seveke, Christian, 61231 Bad Nauheim (DE); Hentschel, Frank, 98574 Schmalkalden (DE)
(74) Vertreter: Marks, Frank

(56) Entgegenhaltungen:
- EP-A1- 0 481 382
- EP-A2- 1 340 577
- US-A- 4 668 948

## Beschreibung

Die Erfindung betrifft ein System zur Ermittlung von komponentenbezogenen Verzugszeiten für die Spritzapplikation von viskosen Fluiden, umfassend ein ansteuerbares Applikationssystem für ein viskoses Fluid mit wenigstens den Komponenten Dosiervorrichtung, Fluidventil und Applikatonsdüse, wobei das dynamische Verhalten des Applikationssystems hinsichtlich des Volumenstromverlaufs des viskosen Fluids beim Applizieren unter anderem auch von komponentenbezogenen Verzugszeiten abhängig ist sowie ein Aufprallobjekt zum Bespritzen mit dem viskosen Fluid durch die Applikationsdüse.

Siehe als nächster Stand der Technik US 4 668 948.

Es ist allgemein bekannt, dass in der industriellen Produktion in vielen Bereichen eine Spritzapplikation von viskosen oder hochviskosen Fluiden zum Einsatz kommt, beispielsweise in der Automobilindustrie bei der Applikation von Dämmmatten oder zum Nahtabdichten. Aber auch die Applikation von Klebstoffen ist ein gängiges Einsatzgebiet für die Spritzapplikation.

Ein entsprechendes Applikationssystem umfasst typischerweise eine Dosiervorrichtung, eine Schlauchverbindung, eine Applikationsdüse sowie ein Fluidventil in strömungstechnischer Nähe zur Applikationsdüse. Mit letzterem kann der von den genannten Komponenten gebildete Fluidkanal zwischen Dosiervorrichtung und Applikationsdüse gezielt unterbrochen werden, um so beispielsweise ein Tropfen des Fluids aus der Applikationsdüse bei abgeschalteter Dosiervorrichtung zu unterbinden. Dies bedingt eine Koordination des An- beziehungsweise Abschaltens von Dosiervorrichtung und Fluidventil, um beispielsweise zu vermeiden, dass die Dosiervorrichtung angeschaltet wird, während das Fluidventil noch geschlossen ist. Dies kann zu einem unzulässig hohen Druckanstieg führen.

Aufgrund der hohen Viskosität des zu applizierenden Materials muss dessen Applikation unter hohem Druck erfolgen, beispielsweise unter Verwendung eines Dosierzylinders mit Servoantrieb. Aber auch weitere Ausführungsformen von Dosiervorrichtungen wie Zahnrad- oder Schneckenpumpen sind dem Fachmann geläufig. Die Schlauchverbindung zwischen Dosierzylinder und Applikationsdüse ist als Hochdruckschlauch auszulegen. Ein Applikationssystem weist daher ein dynamisches Verhalten auf, welches von vielen Faktoren abhängig ist, beispielsweise der Dehnbarkeit des Schlauches, den rotatorischen Massen des Antriebs der Dosiervorrichtung sowie Verzugszeiten, insbesondere beim Ein- oder Ausschalten der Dosiervorrichtung oder dem Ein- oder Ausschalten des Fluidventils. Aber auch die Art des zu applizierenden viskosen Fluids als solches hat einen Einfluss auf das dynamische Verhalten eines Applikationssystems.

Die abschließende geometrische Form des unter hohem Druck durch eine Applikationsdüse auf die Oberfläche eines Objektes applizierten viskosen Materials ist abhängig von der Breite und Homogenität des Spritzstrahls, der Geschwindigkeit, mit welcher die Applikationsdüse über die Oberfläche des zu applizierenden Objektes bewegt wird, beispielsweise mittels eines Roboters, sowie dem jeweiligen Volumenstrom durch die Applikationsdüse. Aufgrund einer typischerweise linearen Bewegung der Applikationsdüse wird das viskose Material prinzipiell in einer streifenähnlichen Form auf die Oberfläche eines Objektes appliziert.

Üblicherweise sind eine möglichst homogene Schichtdicke und eine konstante Breite des applizierten Materialstreifens erwünscht, wobei dessen Breite in hohem Maße von dem Volumenstrom des Fluids durch den Fluidkanal des Applikationssystems während des Applizierens abhängig ist. Aufgrund der bereits erwähnten hohen Dynamik eines derartigen Applikationssystems ist jedoch gerade der Volumenstrom nach einer Änderung der Eingangsparameter des Applikationssystems gewissen dynamischen Schwankungen unterworfen, die auch zu einer bereichsweisen Abweichung der tatsächlich applizierten Streifenbreite von der gewünschten Streifenbreite führt.

Das dynamische Verhalten eines Applikationssystems wird auch von komponentenbezogenen Verzugszeiten bestimmt, insbesondere auch den Verzugszeiten beim Ein- oder Ausschalten der Komponenten Dosiervorrichtung sowie Fluidventil. Wenn die Dosiervorrichtung zeitlich vor dem Öffnen des Fluidventils aktiviert wird, so baut sich binnen kürzester Zeit ein Druck in dem Applikationskanal auf, welcher sowohl das Applikationssystem als solches gefährden kann, welcher aber auch beim nachfolgenden Öffnen des Fluidventils zu einem anfangs deutlich erhöhten Volumenstrom führen kann, weil dann zunächst ein Druckabbau im Fluidkanal erfolgt.

Wenn das Fluidventil erst deutlich nach dem Ausschalten der Dosiervorrichtung geschlossen wird, dann wird der Volumenstrom nicht abrupt unterbrochen, vielmehr erfolgt noch ein anschließender Ausfluss von viskosem Fluid durch die Applikationsdüse, weil der zuvor aufgebaute Druck des im Fluidkanal befindlichen viskosen Fluids abgebaut wird.

Die realen Schaltzeitpunkte insbesondere von Dosiervorrichtung und Fluidventil sind daher aufeinander abzustimmen, um ein optimales Applikationsergebnis zu erzielen. Bei Kenntnis der jeweiligen Verzugszeiten kann das Geben eines Eingangssignals um die jeweilige Verzugszeit vorverlegt werden, so dass eine Änderung letztendlich zu einem gewünschten Schaltzeitpunkt wirksam wird und eine gezielte Abstimmung der realen Schaltzeitpunkte ermöglicht ist.

Gemäß dem Stand der Technik wird die Applikationsdüse zur Bestimmung einer Verzugszeit während einer Testapplikation geradlinig mit einer konstanten Geschwindigkeit über eine Platte bewegt. Bei Erreichen einer bestimmten Bahnposition wird ein Signal zum Ein- oder Ausschalten einer jeweiligen Applikationskomponente gegeben, wobei sich eine Änderung des Applikationsergebnisses erst mit einem zeitlichen Versatz einstellt. Der zeitliche Versatz schlägt sich aufgrund der Bewegung der Applikationsdüse in einem örtlichen Versatz beim Verlauf des Applikationsergebnisses nieder. Bei Kenntnis der Bewegungsgeschwindigkeit der Applikationsdüse lässt sich somit anhand eines gemessenen örtlichen Versatzes zwischen der Position der Düse bei Änderung des Eingangsparameters und Eintritt der Änderung des Applikationsergebnisses eine jeweilige Verzugszeit ermitteln.

Als nachteilig erweist sich hierbei, dass die Bestimmung von Verzugszeiten seither indirekt anhand einer Längenmessung eines applizierten Fluidstreifens auf einem Aufprallobjekt erfolgt, daher sehr aufwändig ist und sich aufgrund notwendiger manueller Zwischenschritte nicht oder nur sehr aufwändig automatisieren lässt.

Ausgehend von diesem Stand der Technik ist es Aufgabe der Erfindung, ein System bereitzustellen, mit welchem komponentenbezogene Verzugszeiten eines Applikationssystems besonders einfach zu ermitteln sind. Aufgabe der Erfindung ist es auch, ein entsprechendes Verfahren anzugeben.

Diese Aufgabe wird gelöst durch ein System der eingangs genannten Art. Dieses ist gekennzeichnet durch
- einen Vibrationssensor zur kontinuierlichen Erfassung von Vibrationen des Aufprallobjektes insbesondere beim Applizieren des viskosen Fluids, wobei der Vibrationssensor dafür vorgesehen ist, in Form von kontinuierlichen Messdaten einen Vibrationsverlauf bereitzustellen,
- wenigstens eine Rechenvorrichtung, welche dafür vorgesehen ist,
   - das Applikationssystem mit einer Sequenz vorgebbarer Eingangsparameter anzusteuern,
   - eine zeitliche Korrelation zwischen der Änderung eines Eingangsparameters des Applikationssystems und einer danach auftretenden Änderung im Vibrationsverlauf herzustellen und daraus
   - eine jeweilige komponentenbezogene Verzugszeit zu ermitteln und bereitzustellen.

Die Grundidee der Erfindung besteht darin, während der Applikation eine Vibrationsmessung an dem Aufprallobjekt durchzuführen, durch welche ein beginnender oder endender beziehungsweise auch ein erhöhter oder reduzierter Aufprall von appliziertem viskosen Fluid detektiert wird. Eine Vibration ist durch Erschütterungen bedingt, welche sowohl einmalig als auch leicht sein können, wobei auch periodische Erschütterungen auftreten können. Sowohl der Beginn als auch das Ende einer Applikation von viskosem Fluid verursachen durch den Aufprallimpuls eine Änderung des Vibrationsverlaufes, womit dieser als Indikator für die Detektion des Wirksamwerdens einer Änderung der Eingangsparameter des Applikationssystems verwendet werden kann.

Wichtig hierbei ist, dass eine zeitliche Korrelation des Vibrationsverlaufes zur Änderung der Eingangsparameter erfassbar ist. Dies lässt sich beispielsweise dadurch erreichen, dass zumindest einige der Messdaten des Vibrationsverlaufes mit einem Zeitstempel versehen werden, wodurch die Bestimmung des zeitlichen Abstandes der jeweiligen Messdaten zum Änderungszeitpunkt der Eingangsparameter ermöglicht ist.

Durch zusätzliches Abspeichern der zeitlichen Informationen ist in einfacher Weise ein nachträgliches Analysieren der Messdaten des Vibrationsverlaufes ermöglicht. Dies ist deshalb besonders vorteilhaft, weil die Detektion des Zeitpunkts einer Änderung im Vibrationsverlauf gegebenenfalls dessen wiederholte Analyse erfordert, welche nicht in Echtzeit erfolgen kann.

Um eine Detektion des Zeitpunkts einer Änderung im Vibrationsverlauf effektiv durchzuführen ist es sinnvoll, die Eingangsparameter während der Applikation vorzugsweise derart zu ändern, dass sich als Folge dessen möglichst eindeutige Änderungen im Volumenstrom des applizierten Fluids ergeben, welche ihrerseits zu einer möglichst eindeutigen Änderung des Vibrationsverlaufes am Aufprallobjekt führen.

Dies kann beispielsweise im Falle der Ermittlung der Verzugszeit des Öffnens des Fluidventils dadurch realisiert werden, dass zuvor durch einen zeitlichen Vorlauf der Dosiervorrichtung ein Vordruck im geschlossenen Fluidkanal aufgebaut wird, so dass unmittelbar nach Öffnen des Fluidventils als Folge eines Druckabbaus ein erhöhter Volumenstrom durch die Applikationsdüse fließt, welcher zu einer besonders eindeutigen Änderung des Vibrationsverlaufes führt. Vor dem Öffnen des Fluidventils liegt zumindest theoretisch keine Vibration vor, wohingegen mit dem ersten Aufprall des viskosen Fluids auf die Oberfläche des Aufprallobjektes eine deutliche Vibration eintritt. In ähnlicher Weise lässt sich auch die Verzugszeit beim Schließen des Fluidventils ermitteln.

Bei der Ermittlung der Verzugszeiten für die Dosiervorrichtung ist die Änderung des Vibrationsverlaufes in starkem Maße auch von dem dynamischen Verhalten des Applikationssystems, insbesondere auch der Schlauchverbindung zwischen Dosiervorrichtung und Applikationsdüse, beeinflusst. Eine Änderung der Eingangsparameter des Applikationssystems führt zunächst zu einem dynamischen Ausgleichsvorgang beim Verlauf des Volumenstroms und damit auch beim Vibrationsverlauf.

So besteht eine geeignete Möglichkeit zur Bestimmung des Zeitpunktes des Auftretens einer Änderung im Vibrationsverlauf darin, den Vibrationsverlauf intervallweise anhand von vorherigen Messdaten für ein Zeitintervall im Voraus zu schätzen und eine Abweichung des gemessenen Wertes von dem Schätzwert als Kriterium für das Auftreten einer Änderung im Vibrationsverlauf zu verwenden.

Es ist fernerhin möglich, stochastische Schwankungen des Vibrationsverlaufs durch einen digitalen Filter zu eliminieren sowie mittels mehrerer unterschiedlicher Detektionsalgorithmen parallel den Zeitpunkt des Auftretens einer Änderung im Vibrationsverlauf zu ermitteln und anhand der plausibelsten Ergebnisse die Verzugszeit zu bestimmen.

Die Rechenvorrichtung kann beispielsweise ein Personal Computer sein, es ist jedoch auch möglich, die von der Rechenvorrichtung zu erledigenden Aufgaben einem Robotercontroller zu übertragen, welcher ebenfalls als Rechenvorrichtung anzusehen ist und welcher für die Steuerung eines Industrieroboters vorgesehen ist, auf welchem beispielsweise die Applikationsdüse des Applikationssystems montiert ist. Dies bietet neben dem Vorteil des Wegfalls einer zusätzlichen Rechenvorrichtung auch den Vorteil, dass eine zeitliche Korrelation zwischen der Änderung der Eingangsparameter, der Roboterbewegung und des Vibrationsverlaufes besonders einfach ermittelbar ist, weil alle erforderlichen Daten zeitgleich in ein und derselben Rechenvorrichtung vorliegen.

Als Aufprallobjekt kann beispielsweise eine steife Platte dienen, aber es ist auch durchaus möglich, ein komplex geformtes Aufprallobjekt wie eine Autokarosserie oder dergleichen mit einem entsprechenden Vibrationssensor auszustatten. Somit kann in einfacher Weise eine Vibrationsmessung an einem zu applizierenden Objekt selbst durchgeführt werden, so dass beispielsweise bei Verwendung eines viskosen Fluids mit anderen Eigenschaften auf einfache Weise während einer Pause in einer Produktionsanlage angepasste Verzugszeiten ermittelt werden können. Ein zusätzlicher Messaufbau ist - außer einem Aufprallobjekt, einem Vibrationssender und dessen datentechnische Anbindung an eine Rechenvorrichtung beziehungsweise einen Robotercontroller - nicht notwendig.

Auf diese Weise ist in einfacher Weise ein Bestimmen von komponentenbezogenen Verzugszeiten eines Applikationssystems ermöglicht.

Gemäß einer bevorzugten Ausgestaltung des erfindungsgemäßen Systems ist der Vibrationssensor dafür vorgesehen, in einer Abtastfrequenz von 100Hz oder höher Messdaten bereitzustellen. Je höher die Abtastfrequenz ist, desto genauer ist eine Verzugszeit bestimmbar. Eine Frequenz von 100Hz entspricht ein Abtastintervall von 10ms, was die untere Grenze für eine praktikable Verzugszeitbestimmung darstellt, wobei höhere Abtastfrequenzen von beispielsweise 1 kHz und höher eine weiter gesteigerte Genauigkeit ermöglichen. Typische Verzugszeiten liegen beispielsweise im Bereich von 50ms bis 200ms.

Weiteren Varianten der Erfindung folgend sind durch einen der Eingangsparameter die Dosiervorrichtung und/oder das Fluidventil ansteuerbar. Beide Komponenten sind mit Verzugszeiten behaftet, welche durch das erfindungsgemäße System in einfacher Weise bestimmbar sind. Gemäß einer weiteren Erfindungsvariante ist das Aufprallobjekt aus einem leichtgewichtigen, steifen Material gefertigt, wodurch durch den Aufprall von viskosem Fluid entstehende Vibrationen zu einem am Aufprallobjekt angeordneten Vibrationssensor übertragbar sind.

Entsprechend einer weiteren vorteilhaften Ausgestaltungsvariante des erfindungsgemäßen Systems ist zumindest die Applikatonsdüse des Applikationssystems auf einem Industrieroboter angeordnet. Die Verwendung eines Industrieroboters erlaubt in vorteilhafter Weise eine kontrolliert gesteuerte Bewegung der Applikationsdüse relativ zum Aufprallobjekt, wobei idealerweise zumindest einige der von der Rechenvorrichtung zu erledigenden Arbeitsschritte dafür vorgesehen sind, von einem zugehörigen Robotercontroller des Industrieroboters ausgeführt zu werden.

Die erfindungsgemäße Aufgabe wird auch gelöst durch Verfahren zur Ermittlung und Anwendung von komponentenbezogenen Verzugszeiten für die Spritzapplikation von viskosen Fluiden mit einem erfindungsgemäßen System, umfassend folgende Schritte
- Ansteuerung des Applikationssystems gemäß einer Sequenz vorgegebener Eingangsparameter, wobei eine Applikation eines viskosen Fluids auf das Aufprallobjekt erfolgt,
- kontinuierliche Vibrationsbestimmung des Aufprallobjektes während der Applikation und Bereitstellung eines entsprechenden Vibrationsverlaufs,
- Ermittlung wenigstens einer Verzugszeit zwischen wenigstens einer Änderung eines Eingangsparameters und Eintritt wenigstens einer nachfolgenden Änderung des Vibrationsverlaufs,
- Zuordnung der Verzugszeit zu der jeweiligen Komponente, deren Eingangsparameter zuvor geändert wurde,
- optional Übertragung der ermittelten komponentenbezogenen Verzugszeit in dieses oder ein baugleiches ansteuerbares Applikationssystem.

Die Funktionsweise und die Vorteile der erfindungsgemäßen Methode wurden bereits im Rahmen des erfindungsgemäßen Systems erläutert.

Gemäß einer weiteren Ausgestaltungsform des erfindungsgemäßen Verfahrens wird neben einem Vibrationsverlauf auch der Verlauf wenigstens einer weiterer fluidbezogener Messgröße, insbesondere der Druckverlauf des Fluids im Inneren des Applikationssystems, bestimmt und bereitgestellt und die wenigstens eine Verzugszeit zwischen Änderung eines Eingangsparameters und dem Eintritt einer nachfolgenden Änderung des Verlaufs der weiteren fluidbezogenen Messgröße ermittelt.

Das Bereitstellen eines Drucksensors ermöglicht die Bestimmung des Drucks im Inneren des Applikationssystems beziehungsweise in dessen Fluidkanal. Das zeitliche Zusammenspiel von Dosiervorrichtung und Fluidventil bestimmt maßgeblich den Druckverlauf im Fluidkanal. Der Druckverlauf ist deshalb ebenfalls eine geeignete Größe zur Bestimmung von komponentenbezogenen Verzugszeiten des Applikationssystems, insbesondere der Komponenten Fluidventil und Dosiervorrichtung. Durch die diversitären Bestimmungsmethoden einer jeweiligen Verzugszeit mittels Vibrationsverlauf und Verlauf einer weiteren fluidbezogenen Messgröße wie Druck im Fluidkanal ist in einem nachfolgenden Auswerteschritt aus den jeweils zuvor bestimmten Verzugszeiten in vorteilhafter Weise ein verbessertes Gesamtergebnis ermittelbar.

Gemäß einer weiteren vorteilhaften Variante des erfindungsgemäßen Verfahrens wird vor der Ermittlung einer jeweiligen Verzugszeit durch die Sequenz genau ein Eingangsparameter geändert, die Sequenz umfasst also nur den Wechsel genau eines Parameters von einem ersten Wert auf einen zweiten Wert. Hierdurch ist in besonders einfacher Weise eine Wirkung, nämlich die Änderung des Vibrationsverlaufes, einer Ursache, nämlich der Änderung des genau einen Eingangsparameters, zuordenbar.

Weiteren Varianten der Erfindung folgend werden durch einen der Eingangsparameter die Dosiervorrichtung und/oder das Fluidventil oder ausgeschaltet. Beide Komponenten sind mit Verzugszeiten behaftet, beispielsweise im Bereich von 50ms bis 200ms, welche durch das erfindungsgemäße System bestimmt werden.

Gemäß einer weiteren Erfindungsvariante werden einer jeweiligen Komponente, beispielsweise dem Fluidventil oder der Dosiervorrichtung, für das Ein- und das Ausschalten jeweils unterschiedliche Verzugszeiten zugeordnet. Das Öffnungsverhalten eines Fluidventils kann beispielsweise ein anderes als sein Schließverhalten sein, weil Öffnungs- und Schließvorgang gegebenenfalls mittels verschiedener Aktuatoren erfolgen. Zur Ermittlung einer Verzugszeit für das Öffnen eines Fluidventils ist dieses durch eine Änderung von dessen Eingangsparameter vom geschlossenen in den offenen Zustand zu versetzen und zur Ermittlung der Verzugszeit für das Schließen vom geöffneten Zustand in den geschlossenen Zustand, wobei der Zeitraum von Änderung des Eingangssignals bis zur Eintritt einer Verlaufsänderung die jeweilige Verzugszeit darstellt.

In vorteilhafter Weise wird gemäß einer weiteren Erfindungsvariante das Verfahren für mehrere Eingangsparameter wiederholt. Hierdurch sind entsprechend mehrere Verzugszeiten für eine und/oder mehrere Komponenten ermittelbar.

Gemäß einer weiteren Verfahrensvariante appliziert dieses oder ein baugleiches ansteuerbares Applikationssystem unter Verwendung der ermittelten komponentenbezogenen Verzugszeiten ein viskoses Fluid, wobei ein jeweiliger Eingangsparameter einer jeweiligen Komponente vorausschauend zeitlich um die jeweilige Verzugszeit verschoben vor einem gewünschten jeweiligen Änderungszeitpunkt geändert wird. Hierdurch sind während eines Produktionseinsatzes des Applikationssystems in vorteilhafter Weise komponentenbezogene Verzugszeiten kompensiert und eine gezielte zeitliche Abstimmung von Komponenten wie Dosiervorrichtung und Fluidventil ist in vorteilhafter Weise vereinfacht.

Einer weiteren Erfindungsvariante folgend ist ein baugleiches ansteuerbares Applikationssystem stationär angeordnet und ein zu applizierendes Objekt wird beim Applizieren durch einen Roboter relativ zur Applikationsdüse bewegt. Durch die stationäre Anordnung des Applikationssystems mit seiner Applikationsdüse werden in vorteilhafter Weise eventuelle negative Einflüsse einer Bewegung des Applikationssystems auf sein dynamisches Verhalten ausgeschlossen.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein exemplarisches System zur Ermittlung von komponentenbezogenen Verzugszeiten sowie
- Fig. 2: einen exemplarischer Vibrationsverlauf bei Änderung eines Eingangsparameters.

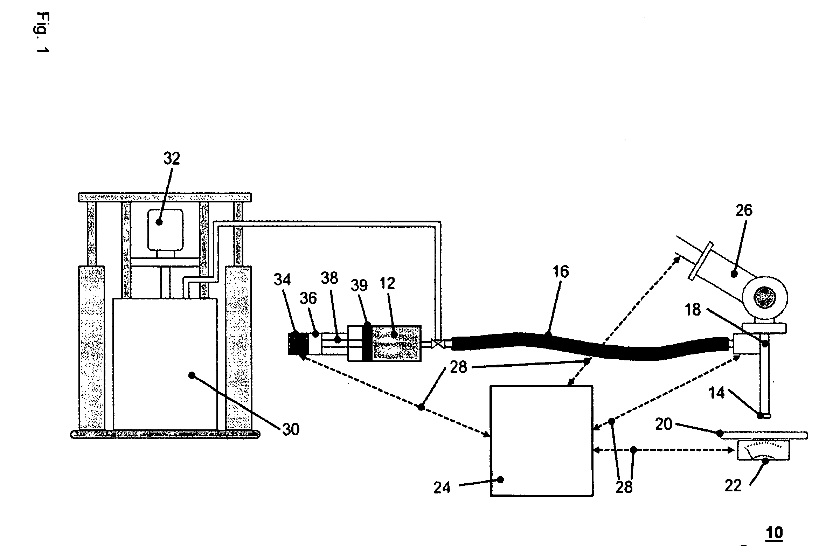

Fig. 1 zeigt ein exemplarisches System zur Ermittlung von komponentenbezogenen Verzugszeiten in einer schematischen Darstellung 10. Eine Dosiervorrichtung 12, umfassend einen Dosierantrieb 34, ein Getriebe 36, eine Spindel 38 sowie einen Dosierzylinder 39, ist dafür vorgesehen, ein viskoses Fluid mit einem vorgegebenen Volumenstrom aus dem Dosierzylinder 39 zu drücken. Der Volumenstrom ergibt sich letztendlich aus der Drehzahl des Dosierantriebs 34, wobei anhand der geometrischen Randbedingungen jeder Umdrehung ein bestimmtes Volumen zugeordnet werden kann. Eine Vorgabe eines gewünschten Volumenstroms erfolgt in diesem Fall durch den Eingangsparameter Drehzahl des Dosierantriebs.

Das aus einer Auslassöffnung des Dosierzylinders 39 strömende viskose Fluid wird über einen Hochdruckschlauch 16 einer Applikationsdüse 14 zugeführt, wobei strömungstechnisch kurz vor der Applikationsdüse 14 ein Fluidventil 18 vorgesehen ist, durch welches der von den zuvor genannten Komponenten gebildete Fluidkanal abgesperrt werden kann. Die Applikationsdüse 14 ist am distalen Ende des Armes eines Industrieroboters 26 angeordnet, welcher beispielsweise über 6 Bewegungsfreiheitsgrade verfügt und eine Armlänge von 2,5m aufweist. Hierdurch ist eine gesteuerte Bewegung der Applikationsdüse 14 entlang der Oberfläche eines zu applizierenden Objektes ermöglicht, wobei ein Spritzabstand von beispielsweise 10mm - 20mm eingehalten wird.

In diesem Beispiel erfolgt eine Applikation des viskosen Fluids auf ein Aufprallobjekt 20, in diesem Fall eine leichtgewichtige, steife Platte, welche waagrecht unterhalb der Applikationsdüse 14 angeordnet ist. Das Aufprallobjekt 20 ist auf einem Vibrationssensor 22 angeordnet, welcher dafür vorgesehen, ist, kontinuierlich Vibrationen des Aufprallobjektes 20 mittels einer Kommunikationsleitung 28 an eine Rechenvorrichtung 24 zu übertragen. Die Rechenvorrichtung 24 ist in diesem Beispiel ein Robotercontroller, welcher für die Steuerung des Industrieroboters 26 und der Dosiervorrichtung 12 vorgesehen ist.

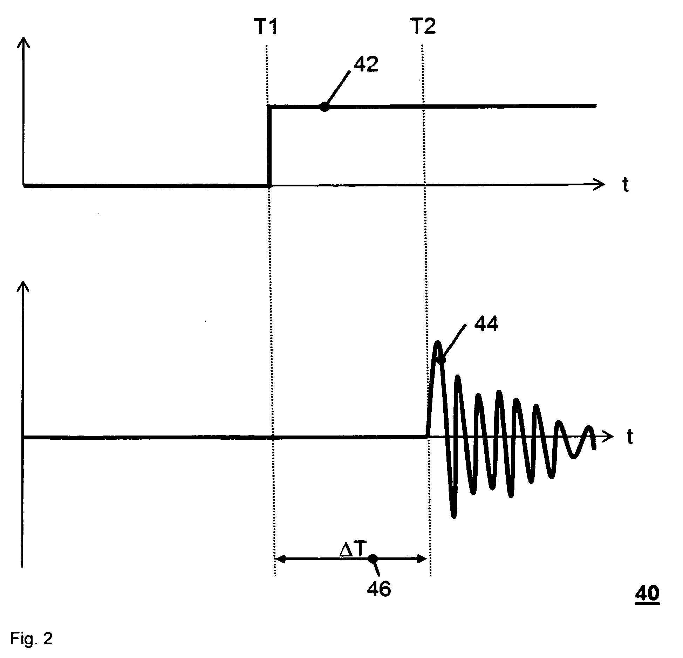

Fig. 2 zeigt einen exemplarischen Vibrationsverlauf bei Änderung eines Eingangsparameters in einer Darstellung 40. Der Eingangsparamete für das Schaltsignal eines Fluidventils wird zu einem Zeitpunkt T1 geändert wie dem Eingangsparameterverlauf 42 ersichtlich, so dass dieses geöffnet wird und nachfolgend eine Applikation von viskosem Fluid erfolgt. Bis zum Zeitpunkt T2 zeigt der zeitlich korrelierende Vibrationsverlauf 44 keine Ausschläge, weil kein viskoses Fluid appliziert wird, wodurch Vibrationen hervorgerufen werden könnten. Aufgrund einer komponentenbezogenen Verzugszeit des Fluidventils wird der Fluidkanal erst verspätet zum Zeitpunkt T2 freigegeben, so dass erst ab diesem Zeitpunkt eine Vibration auftritt. Aus der Differenz der Zeitpunkte T1 und T2 ergibt sich eine Verzugszeit 46.

### Bezugszeichenliste

- 10: exemplarisches System zur Ermittlung von komponentenbezogenen Verzugszeiten
- 12: Dosiervorrichtung
- 14: Applikatonsdüse
- 16: Hochdruckschlauch
- 18: Fluidventil
- 20: Aufprallobjekt
- 22: Vibrationssensor
- 24: exemplarische Rechenvorrichtung
- 26: Industrieroboter
- 28: Kommunikationsleitung
- 30: Fluidreservoir
- 32: Antriebseinheit
- 34: Dosierantrieb
- 36: Getriebe
- 38: Spindel
- 39: Dosierzylinder
- 40: exemplarischer Vibrationsverlauf bei geändertem Eingangsparameter
- 42: Eingangsparameterverlauf
- 44: Vibrationsverlauf
- 46: Verzugszeit

## Patentansprüche

1. System (10) zur Ermittlung von komponentenbezogenen Verzugszeiten (42) für die Spritzapplikation von viskosen Fluiden, umfassend
• ein ansteuerbares Applikationssystem für ein viskoses Fluid mit wenigstens den Komponenten Dosiervorrichtung (12), Fluidventil (18) und Applikatonsdüse (14),
• wobei das dynamische Verhalten des Applikationssystems hinsichtlich des Volumenstromverlaufs des viskosen Fluids beim Applizieren unter anderem auch von komponentenbezogenen Verzugszeiten (42) abhängig ist,
• ein Aufprallobjekt (20) zum Bespritzen mit dem viskosen Fluid durch die Applikationsdüse (14),
**gekennzeichnet durch**
• einen Vibrationssensor (22) zur kontinuierlichen Erfassung von Vibrationen des Aufprallobjektes (20) insbesondere beim Applizieren des viskosen Fluids, wobei der Vibrationssensor (22) dafür vorgesehen ist, in Form von kontinuierlichen Messdaten einen Vibrationsverlauf (44) bereitzustellen,
• wenigstens eine Rechenvorrichtung (24), welche dafür vorgesehen ist,
• das Applikationssystem mit einer Sequenz vorgebbarer Eingangsparameter (42) anzusteuern,
• eine zeitliche Korrelation zwischen der Änderung eines Eingangsparameters des Applikationssystems und einer danach auftretenden Änderung im Vibrationsverlauf (44) herzustellen und daraus
• eine jeweilige komponentenbezogene Verzugszeit (46) zu ermitteln und bereitzustellen.

2. System nach Anspruch 1, **dadurch gekennzeichnet, dass** der Vibrationssensor (22) dafür vorgesehen ist, in einer Frequenz von 100Hz oder höher Messdaten bereitzustellen.

3. System nach einem der Ansprüche 1 oder 2, **dadurch gekennzeichnet, dass** durch einen der Eingangsparameter die Dosiervorrichtung (12) ansteuerbar ist.

4. System nach einem der vorherigen Ansprüche, **dadurch gekennzeichnet, dass** durch einen der Eingangsparameter das Fluidventil (18) ansteuerbar ist.

5. System nach einem der vorherigen Ansprüche, **dadurch gekennzeichnet, dass** das Aufprallobjekt (20) aus einem leichtgewichtigem, steifen Material gefertigt ist.

6. System nach einem der vorherigen Ansprüche, **dadurch gekennzeichnet, dass** zumindest die Applikationsdüse (14) des Applikationssystems auf einem Industrieroboter (26) angeordnet ist.

7. Verfahren zur Ermittlung und Anwendung von komponentenbezogenen Verzugszeiten (46) für die Spritzapplikation von viskosen Fluiden mit einem System nach einem der Ansprüche 1 bis 6, umfassend folgende Schritte
• Ansteuerung des Applikationssystems (10) gemäß einer Sequenz vorgegebener Eingangsparameter (42), wobei eine Applikation eines viskosen Fluids auf das Aufprallobjekt (20) erfolgt,
• kontinuierliche Vibrationsbestimmung des Aufprallobjektes (20) während der Applikation und Bereitstellung eines entsprechenden Vibrationsverlaufs (44),
• Ermittlung wenigstens einer Verzugszeit (46) zwischen wenigstens einer Änderung eines Eingangsparameters und Eintritt wenigstens einer nachfolgenden Änderung des Vibrationsverlaufs (44),
• Zuordnung der Verzugszeit (46) zu der jeweiligen Komponente, deren Eingangsparameter zuvor geändert wurde,
• optional Übertragung der ermittelten komponentenbezogenen Verzugszeit (42) in dieses oder ein baugleiches ansteuerbares Applikationssystem (10).

8. Verfahren nach Anspruch 7, **dadurch gekennzeichnet, dass** neben einem Vibrationsverlauf (44) auch der Verlauf wenigstens einer weiterer fluidbezogener Messgröße, insbesondere der Druckverlauf des Fluids im Inneren des Applikationssystems, bestimmt und bereitgestellt wird und die wenigstens eine Verzugszeit (46) zwischen Änderung eines Eingangsparameters und dem Eintritt einer nachfolgenden Änderung des Verlaufs der weiteren fluidbezogenen Messgröße ermittelt wird.

9. Verfahren nach Anspruch 7 oder 8, **dadurch gekennzeichnet, dass** vor der Ermittlung einer jeweiligen Verzugszeit (46) durch die Sequenz genau ein Eingangsparameter geändert wird.

10. Verfahren nach einem der Ansprüche 7 bis 9, **dadurch gekennzeichnet, dass** durch einen Eingangsparameter die Dosiervorrichtung (12) ein- oder ausgeschaltet wird.

11. Verfahren nach einem der Ansprüche 7 bis 10, **dadurch gekennzeichnet, dass** durch einen Eingangsparameter das Fluidventil (18) ein- oder ausgeschaltet wird.

12. Verfahren nach einem der Ansprüche 7 bis 11, **dadurch gekennzeichnet, dass** einer jeweiligen Komponente für das Ein- und das Ausschalten jeweils unterschiedliche Verzugszeiten (46) zugeordnet werden.

13. Verfahren nach einem der Ansprüche 7 bis 12, **dadurch gekennzeichnet, dass** das Verfahren für mehrere Eingangsparameter wiederholt wird.

14. Verfahren nach einem der Ansprüche 7 bis 13, **dadurch gekennzeichnet, dass** dieses oder ein baugleiches ansteuerbares Applikationssystem (10) unter Verwendung der ermittelten komponentenbezogenen Verzugszeiten (46) ein viskoses Fluid appliziert, wobei ein jeweiliger Eingangsparameter einer jeweiligen Komponente vorausschauend zeitlich um die jeweilige Verzugszeit (46) verschoben vor einem gewünschten jeweiligen Änderungszeitpunkt geändert wird.

15. Verfahren nach Anspruch 14, **dadurch gekennzeichnet, dass** ein baugleiches ansteuerbares Applikationssystem (10) stationär angeordnet ist und ein zu applizierendes Objekt beim Applizieren durch einen Roboter relativ zur Applikationsdüse (14) bewegt wird.

## Claims

1. System (10) for determining component-related delay times (42) for the spray application of viscous fluids, comprising
• an actuable application system for a viscous fluid having at least the components of a metering device (12), fluid valve (18) and application nozzle (14),
• wherein the dynamic behaviour of the application system is dependent, with respect to the volume flow profile of the viscous fluid during the application, also on, inter alia, component-related delay times (42), and
• an impacted object (20) to be sprayed with the viscous fluid by the application nozzle (14),
**characterized by**
• a vibration sensor (22) for continuously sensing vibrations of the impacted object (20), in particular during the application of the viscous fluid, wherein the vibration sensor (22) is provided to make available a vibration profile (44) in the form of continuous measurement data, and
• at least one computing device (24) which is provided
• for actuating the application system with a sequence of predefinable input parameters (42),
• for bringing about a chronological correlation between the change in an input parameter of the application system and a change occurring thereafter in the vibration profile (44) and
• determining therefrom and making available a respective component-related delay time (46).

2. System according to Claim 1, **characterized in that** the vibration sensor (22) is provided for making available measurement data with a frequency of 100 Hz or higher.

3. System according to one of Claims 1 and 2, **characterized in that** the metering device (12) can be actuated by one of the input parameters.

4. System according to one of the preceding claims, **characterized in that** the fluid valve (18) can be actuated by one of the input parameters.

5. System according to one of the preceding claims, **characterized in that** the impacted object (20) is fabricated from a lightweight, rigid material.

6. System according to one of the preceding claims, **characterized in that** at least the application nozzle (14) of the application system is arranged on an industrial robot (26).

7. Method for determining and applying component-related delay times (46) for the spray application of viscous fluids with a system according to one of Claims 1 to 6, comprising the following steps:
• actuating the application system (10) according to a sequence of predefined input parameters (42), wherein a viscous fluid is applied to the impacted object (20),
• continuous determination of vibrations of the impacted object (20) while a corresponding vibration profile (44) is applied and made available,
• determining at least one delay time (46) between at least one change in an input parameter and the occurrence of at least one subsequent change in the vibration profile (44),
• assigning the delay time (46) to the respective component whose input parameter has been changed previously,
• optionally transmitting the determined component-related delay time (42) into this, or into a structurally identical, an actuable application system (10).

8. Method according to Claim 7, **characterized in that** in addition to a vibration profile (44) the profile of at least one further fluid-related measurement variable, in particular the pressure profile of the fluid in the interior of the application system, is also determined and made available, and the at least one delay time (46) between a change in an input parameter and the occurrence of a subsequent change in the profile of the further fluid-related measurement variable is determined.

9. Method according to Claim 7 or 8, **characterized in that** before a respective delay time (46) is determined, precisely one input parameter is changed by means of the sequence.

10. Method according to one of Claims 7 to 9, **characterized in that** the metering device (12) is switched on or off by means of an input parameter.

11. Method according to one of Claims 7 to 10, **characterized in that** the fluid valve (18) is switched on or off by means of an input parameter.

12. Method according to one of Claims 7 to 11, **characterized in that** in each case different delay times (46) are assigned to a respective component for the switching on and switching off.

13. Method according to one of Claims 7 to 12, **characterized in that** the method is repeated for a plurality of input parameters.

14. Method according to one of Claims 7 to 13, **characterized in that** this, or a structurally identical, an actuable application system (10) applies a viscous fluid using the determined component-related delay times (46), wherein a respective input parameter of a respective component is changed predictively by shifting chronologically by the respective delay time (46) before a desired respective change time.

15. Method according to Claim 14, **characterized in that** a structurally identical, an actuable application system (10) is arranged in a fixed fashion and an object which is to be sprayed is moved by a robot relative to the application nozzle (14) during the application process.

## Revendications

1. Système (10) de détermination de retards (42) liés aux composants pour l'application par pulvérisation de fluides visqueux, comprenant
* un système d'application commandable pour un fluide visqueux comprenant au moins les composants dispositif de dosage (12), vanne à fluide (18) et buse d'application (14),
* le comportement dynamique du système d'application en termes de comportement de la courbe de débit volumique du fluide visqueux lors de l'application étant dépendant, entre autres, des retards (42) liés aux composants,
* un objet d'impact (20) destiné à être pulvérisé avec le fluide visqueux à travers la buse d'application (14),
**caractérisé par**
* un capteur de vibrations (22) destiné à la détection continue de vibrations de l'objet d'impact (20), notamment lors de l'application du fluide visqueux, le capteur de vibrations (22) étant conçu pour délivrer une courbe de vibration (44) sous la forme de données de mesure continues,
* au moins un dispositif de calcul (24) qui est conçu pour
** commander le système d'application avec une séquence de paramètres d'entrée (42) pouvant être prédéfinis,
** établir une corrélation temporelle entre la modification d'un paramètre d'entrée du système d'application et une modification survenant ensuite dans la courbe de vibration (44) et, de là
** déterminer et fournir un retard (46) lié aux composants respectif.

2. Système selon la revendication 1, **caractérisé en ce que** le capteur de vibrations (22) est conçu pour délivrer des données de mesure à une fréquence égale ou supérieure à 100 Hz.

3. Système selon l'une des revendications 1 ou 2, **caractérisé en ce que** le dispositif de dosage (12) peut être commandé par l'un des paramètres d'entrée.

4. Système selon l'une des revendications précédentes, **caractérisé en ce que** la vanne à fluide (18) peut être commandée par l'un des paramètres d'entrée.

5. Système selon l'une des revendications précédentes, **caractérisé en ce que** l'objet d'impact (20) est fabriqué dans un matériau rigide léger.

6. Système selon l'une des revendications précédentes, **caractérisé en ce qu'**au moins la buse d'application (14) du système d'application est montée sur un robot industriel (26).

7. Procédé de détermination et d'utilisation de retards (46) liés aux composants pour l'application par pulvérisation de fluides visqueux avec un système selon l'une des revendications 1 à 6, comprenant les étapes suivantes
* commande du système d'application (10) conformément à une séquence de paramètres d'entrée (42) prédéfinis, une application d'un fluide visqueux sur l'objet d'impact (20) ayant lieu,
* détermination continue des vibrations de l'objet d'impact (20) pendant l'application et délivrance d'une courbe de vibration (44) correspondante,
* détermination d'au moins un retard (46) entre au moins une modification d'un paramètre d'entrée et la survenue d'au moins une modification suivante de la courbe de vibration (44),
* affectation du retard (46) au composant correspondant dont le paramètre d'entrée a précédemment été modifié,
* transmission optionnelle du retard (42) déterminé lié aux composants dans ce système d'application (10) commandable ou un système d'application (10) commandable de construction similaire.

8. Procédé selon la revendication 7, **caractérisé en ce qu'**en plus de la courbe de vibration (44), la courbe d'au moins une grandeur mesurée supplémentaire liée au fluide, notamment la courbe de pression du fluide à l'intérieur du système d'application, est déterminée et délivrée et l'au moins un retard (46) entre la modification d'un paramètre d'entrée et la survenue d'une modification suivante de la courbe de la grandeur mesurée supplémentaire liée au fluide est déterminé.

9. Procédé selon la revendication 7 ou 8, **caractérisé en ce qu'**avant la détermination d'un retard (46) correspondant, exactement un paramètre d'entrée est modifié par la séquence.

10. Procédé selon l'une des revendications 7 à 9, **caractérisé en ce que** le dispositif de dosage (12) est mis en circuit ou hors circuit par un paramètre d'entrée.

11. Procédé selon l'une des revendications 7 à 10, **caractérisé en ce que** la vanne à fluide (18) est mise en circuit ou hors circuit par un paramètre d'entrée.

12. Procédé selon l'une des revendications 7 à 11, **caractérisé en ce que** des retards (46) respectivement différents sont associés à un composant correspondant pour la mise en circuit et hors circuit.

13. Procédé selon l'une des revendications 7 à 12, **caractérisé en ce que** le procédé est répété pour plusieurs paramètres d'entrée.

14. Procédé selon l'une des revendications 7 à 13, **caractérisé en ce que** ce système d'application (10) commandable ou un système d'application (10) commandable de construction similaire applique un fluide visqueux en utilisant les retards déterminés (46) liés aux composants, un paramètre d'entrée correspondant d'un composant correspondant étant décalé dans le temps par anticipation du retard (46) correspondant avant un instant de modification respectif souhaité.

15. Procédé selon la revendication 14, **caractérisé en ce qu'**un système d'application (10) commandable de construction similaire est monté en position fixe et un objet à appliquer est déplacé par un robot par rapport à la buse d'application (14) lors de l'application.
